# EUROPÄISCHE PATENTSCHRIFT

(11) **EP 4 222 409 B1**
(45) Veröffentlichungstag und Bekanntmachung des Hinweises auf die Patenterteilung: **31.07.2024**
(21) Anmeldenummer: 21790075.2
(22) Anmeldetag: 01.10.2021
(51) Int. Cl.: F17C 13/04

(54) **VERFAHREN ZUM BETREIBEN EINER KRYO-BETANKUNGSANORDNUNG**
METHOD FOR OPERATING A CRYO FILLING ARRANGEMENT
PROCÉDÉ DE FONCTIONNEMENT D'UN AGENCEMENT DE CRYO-RAVITAILLEMENT

(30) Priorität: 02.10.2020 EP 20020448
(43) Veröffentlichungstag der Anmeldung: 09.08.2023
(73) Patentinhaber: Linde GmbH, 82049 Pullach (DE); Butting Cryo Tech GmbH, 84508 Burgkirchen (DE)
(72) Erfinder: EHEGARTNER, Florian, 82049 Pullach (DE); GERSTL, Peter, 82049 Pullach (DE); REITER, Bernhard, 84508 Burgkirchen (DE)
(74) Vertreter: Meilinger, Claudia Sabine
(86) Internationale Anmeldenummer: PCT/EP2021/025375
(87) Internationale Veröffentlichungsnummer: WO 2022/069076

(56) Entgegenhaltungen:
- EP-A2- 1 004 809
- DE-A1- 4 041 337
- US-A- 5 301 723
- US-A- 5 404 909
- US-A- 5 725 034
- US-A1- 2018 156 371

## Beschreibung

Die Erfindung betrifft ein Verfahren zum Betreiben einer Kryo-Betankungsanordnung.

EP1004809A2 offenbart ein solches Verfahren.

Mit Hilfe einer sogenannten Kryo-Betankungsanlage oder Kryo-Betankungsanordnung kann ein Speicherbehälter, beispielsweise eines Fahrzeugs, mit einem Kryogen betankt werden. Das Kryogen kann beispielsweise flüssiger Wasserstoff sein. Der Betankungsvorgang erfordert eine Vielzahl manuell durchzuführender Schritte. Insbesondere Vor- und Nachbereitungsprozesse vor beziehungsweise nach dem eigentlichen Betankungsvorgang können lange dauern. Dies macht den Betankungsvorgang sehr aufwändig. Ferner ist der Betankungsvorgang dadurch auch nur von speziell geschultem Personal durchführbar.

Vor diesem Hintergrund besteht eine Aufgabe der vorliegenden Erfindung darin, ein verbessertes Verfahren zum Betreiben einer Kryo-Betankungsanordnung zur Verfügung zu stellen.

Demgemäß wird ein Verfahren zum Betreiben einer Kryo-Betankungsanordnung umfassend eine Kupplungsvorrichtung und einen Empfängerstutzen vorgeschlagen.

Das Verfahren weist die folgenden Schritte auf: a) Ankuppeln der Kupplungsvorrichtung an den Empfängerstutzen derart, dass die Kupplungsvorrichtung und der Empfängerstutzen in einer ersten Position miteinander verriegelt werden, b) Beaufschlagen der Kupplungsvorrichtung und/oder des Empfängerstutzens mit einem Unterdruck, c) Entriegeln der Kupplungsvorrichtung und des Empfängerstutzens, so dass die Kupplungsvorrichtung bedingt durch den Unterdruck aus der ersten Position in eine sich von der ersten Position unterscheidende zweite Position in Richtung auf den Empfängerstutzen zu verlagert wird, d) Verriegeln der Kupplungsvorrichtung und des Empfängerstutzens in der zweiten Position, und e) Starten eines Betankungsvorgangs.

Dadurch, dass die Kupplungsvorrichtung mit Hilfe des Unterdrucks von der ersten position in die zweite Position verlagert wird, kann das Verfahren automatisiert durchgeführt werden. Dies ermöglicht sehr kurze Taktzeiten, hohe Durchflussraten sowie eine sehr hohe Sicherheit für den Bediener und das Verfahren an sich.

Zum Ankuppeln der Kupplungsvorrichtung an den Empfängerstutzen kann die Kupplungsvorrichtung in den Empfängerstutzen eingesteckt werden. Mit Hilfe eines Sensors oder Schalters kann überprüft werden, ob sich die Kupplungsvorrichtung und der Empfängerstutzen in der ersten Position befinden und so miteinander verriegelt werden können. Zum Verriegeln der Kupplungsvorrichtung in der ersten Position kann ein dem Empfängerstutzen zugeordnetes erstes Eingriffselement zugeordnet sein, das zum Verriegeln der Kupplungsvorrichtung und des Empfängerstutzens formschlüssig in ein der Kupplungsvorrichtung zugeordnetes erstes Gegeneingriffselement eingreifen kann.

Zum Erzeugen des Unterdrucks beziehungsweise eines Vakuums kann die Kryo-Betankungsanordnung eine Vakuumpumpe aufweisen. Unter "Beaufschlagen" ist vorliegend zu verstehen, dass ein der Kupplungsvorrichtung und/oder dem Empfängerstutzen zugeordnetes Volumen oder ein Hohlraum mit Hilfe der Vakuumpumpe evakuiert wird. Das Entriegeln erfolgt automatisiert dadurch, dass das erste Eingriffselement außer Eingriff mit dem ersten Gegeneingriffselement gebracht wird. Nach dem Entriegeln wird die Kupplungsvorrichtung durch den Unterdruck in den Empfägerstutzen gezogen, so dass die Kupplungsvorrichtung in die zweite Position verbracht wird. Ob sich die Kupplungsvorrichtung in der zweiten Position befindet, kann beispielsweise mit Hilfe eines Sensors, eines Schalters oder dergleichen abgefragt werden.

Zum Verriegeln der Kupplungsvorrichtung und des Empfängerstutzens in der zweiten Position ist ein der Kupplungsvorrichtung zugeordnetes zweites Eingriffselement zugeordnet, das zum Verriegeln der Kupplungsvorrichtung und des Empfängerstutzens in der zweiten Position formschlüssig in ein dem Empfängerstutzen zugeordnetes zweites Gegeneingriffselement eingreifen kann. Nach dem Starten des Betankungsvorgangs strömt das Kryogen durch die Kryo-Betankungsanordnung hindurch.

Gemäß einer Ausführungsform wird vor dem Schritt e) ein Druckhaltetest durchgeführt.

Hierdurch können Leckagen entdeckt werden.

Gemäß einer weiteren Ausführungsform wird während des Schritts b) ein zwischen einer Absperrarmatur der Kupplungsvorrichtung und einer Absperrarmatur des Empfängerstutzens vorgesehenes Volumen mit dem Unterdruck beaufschlagt.

Die Absperrarmaturen sind einander gegenüberliegend angeordnet. Die Absperrarmaturen können als Deckel, Schieber oder dergleichen ausgebildet sein.

Gemäß einer weiteren Ausführungsform werden vor dem Schritt c) die Absperrarmaturen geöffnet.

Hierdurch werden der Kupplungsvorrichtung und dem Empfängerstutzen zugeordnete Volumina miteinander verbunden.

Gemäß einer weiteren Ausführungsform wird während des Schritts b) ein von einem Gehäuse des Empfängerstutzens umschlossenes Volumen mit dem Unterdruck beaufsch lagt.

Der Kupplungsvorrichtung ist ebenfalls ein Gehäuse zugeordnet, das ein der Kupplungsvorrichtung zugeordnetes Volumen umschließt.

Gemäß einer weiteren Ausführungsform werden die Schritte a) bis e) mit Hilfe einer Steuereinrichtung der Kryo-Betankungsanordnung automatisiert durchgeführt.

Beispielsweise steuert die Steuereinrichtung die Vakuumpumpe und die Eingriffselemente an. Die Eingriffselemente können beweglich gelagert sein und mit Hilfe eines Aktuators bewegt werden.

Gemäß einer weiteren Ausführungsform werden vor oder bei dem Schritt e) ein Hauptventil der Kupplungsvorrichtung und ein Benutzerventil des Empfängerstutzens geöffnet.

Beispielsweise kann der Benutzer das Benutzerventil manuell öffnen.

Gemäß einer weiteren Ausführungsform wird während des Schritts c) eine Kupplung der Kupplungsvorrichtung an eine Kupplung des Empfängerstutzens angekuppelt.

Beispielsweise weist der Empfängerstutzen eine weibliche Kupplung und die Kupplungsvorrichtung eine dazu korrespondierende männliche Kupplung auf.

Gemäß einer weiteren Ausführungsform wird nach dem Schritt e) ein Entlüftungsventil der Kupplungsvorrichtung geöffnet, um eine Druckwechselspülung der Kupplungen durchzuführen.

Hierdurch kann beispielsweise feuchte Umgebungsluft ausgespült werden. Hierdurch kann ein Vereisen der Kryo-Betankungsanordnung zuverlässig verhindert werden.

Gemäß einer weiteren Ausführungsform werden die Kupplungsvorrichtung und/oder der Empfängerstutzen nach der Druckwechselspülung von dem Unterdruck entlastet.

Dies kann beispielsweise durch ein Belüften der Kupplungsvorrichtung und/oder des Empfängerstutzens erfolgen.

Gemäß einer weiteren Ausführungsform werden die Kupplungsvorrichtung und der Empfängerstutzen nach dem Entlasten von dem Unterdruck in der zweiten Position entriegelt.

Hierzu kann das zweite Eingriffselement außer Eingriff mit dem zweiten Gegeneingriffselement gebracht werden.

Gemäß einer weiteren Ausführungsform werden die Kupplungsvorrichtung und/oder der Empfängerstutzen nach dem Entriegeln mit einem Überdruck beaufschlagt, so dass die Kupplungsvorrichtung bedingt durch den Überdruck aus der zweiten Position in Richtung von dem Empfängerstutzen weg in die erste Position verlagert wird.

Der Überdruck kann beispielsweise mit Hilfe verdampftem Kryogen erzeugt werden.

Gemäß einer weiteren Ausführungsform werden die Kupplungsvorrichtung und der Empfängerstutzen in der ersten Position verriegelt.

Hierzu greifen das erste Eingriffselement und das erste Gegeneingriffselement ineinander.

Gemäß einer weiteren Ausführungsform werden eine Absperrarmatur der Kupplungsvorrichtung und eine Absperrarmatur des Empfängerstutzens verschlossen.

Danach können die Kupplungsvorrichtung und der Empfängerstutzen voneinander getrennt werden.

Gemäß einer weiteren Ausführungsform wird vor dem Schritt e) ein Abkühlvorgang durchgeführt.

Dies wird mit Hilfe des Kryogens durchgeführt.

"Ein" ist vorliegend nicht zwangsweise als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine genaue Beschränkung auf genau die entsprechende Anzahl von Elementen verwirklicht sein muss. Vielmehr sind zahlenmäßige Abweichungen nach oben und nach unten möglich.

Weitere mögliche Implementierungen des Verfahrens umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Verfahrens hinzufügen.

Weitere vorteilhafte Ausgestaltungen des Verfahrens sind Gegenstand der Unteransprüche sowie der im Folgenden beschriebenen Ausführungsbeispiele des Verfahrens. Im Weiteren wird das Verfahren anhand von bevorzugten Ausführungsformen unter Bezugnahme auf die beigelegten Figuren näher erläutert.
Fig. 1 zeigt eine schematische Ansicht einer Ausführungsform einer Kryo-Betankungsanordnung;
Fig. 2 zeigt eine weitere schematische Ansicht der Kryo-Betankungsanordnung;
Fig. 3 zeigt eine weitere schematische Ansicht der Kryo-Betankungsanordnung;
Fig. 4 zeigt eine weitere schematische Ansicht der Kryo-Betankungsanordnung; und
Fig. 5 zeigt ein schematisches Blockdiagramm einer Ausführungsform eines Verfahrens zum Betreiben der Kryo-Betankungsanordnung gemäß Fig. 1.

In den Figuren sind gleiche oder funktionsgleiche Elemente mit denselben Bezugszeichen versehen worden, sofern nichts anderes angegeben ist.

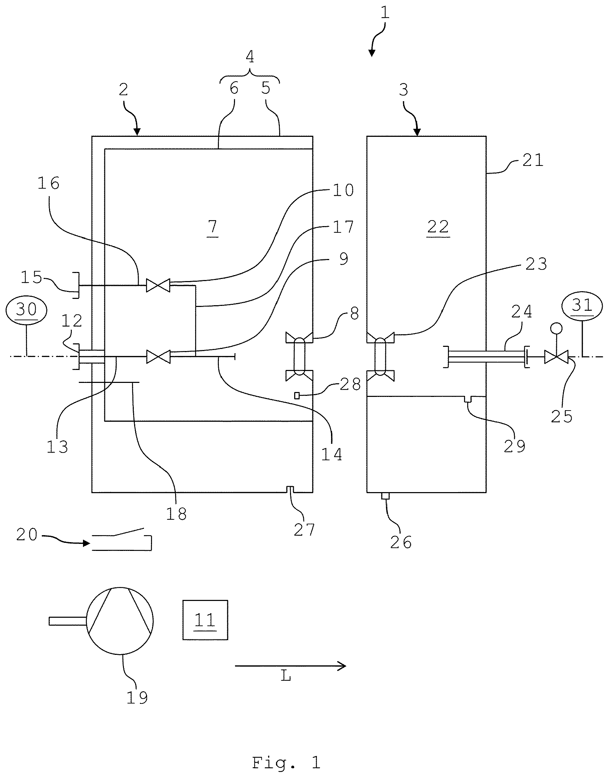

Die Fig. 1 zeigt eine schematische Ansicht einer Cryo- oder Kryo-Betankungsanordnung 1. Die Kryo-Betankungsanordnung 1 umfasst eine Kupplungsvorrichtung 2 sowie einen Empfängerstutzen 3 zum Aufnehmen der Kupplungsvorrichtung 2. Der Empfängerstutzen 3 kann die Kupplungsvorrichtung 2 zumindest abschnittsweise aufnehmen. Die Kupplungsvorrichtung 2 und der Empfängerstutzen 3 können miteinander verbunden und wieder voneinander getrennt werden. Die Kryo-Betankungsanordnung 1 ist geeignet, beispielsweise einen Speicherbehälter mit einem Kryogen zu betanken. Das Kryogen kann beispielsweise flüssiger Wasserstoff, Monosilan, Äthylen oder dergleichen sein.

Die Kupplungsvorrichtung 2 umfasst ein Gehäuse 4 mit einer äußeren oder ersten Wandung 5 und einer in der ersten Wandung 5 aufgenommenen inneren oder zweiten Wandung 6. Die zweite Wandung 6 umschließt ein erstes Volumen 7. Die Kupplungsvorrichtung 2 weist eine Absperrarmatur 8 auf. Die Absperrarmatur 8 ermöglicht einen fluidischen Zugang zu dem ersten Volumen 7. Die Absperrarmatur 8 kann ein Ventil, insbesondere ein Auf-Zu-Ventil, sein. Die Absperrarmatur 8 kann als öffenbare und schließbare Klappe, Schieber oder dergleichen ausgebildet sein.

Die Kupplungsvorrichtung 2 weist ein Hauptventil 9 und ein Entlüftungsventil 10 auf. Das Hauptventil 9 und das Entlüftungsventil 10 sind bevorzugt Auf-Zu-Ventile. Das Hauptventil 9, das Entlüftungsventil 10 und die Absperrarmatur 8 können mit Hilfe einer Steuereinrichtung 11 angesteuert werden. Das Hauptventil 9 und das Entlüftungsventil 10 lassen sich bevorzugt automatisiert ansteuern.

Von einer Kupplung 12 führt eine Leitung 13 zu dem Hauptventil 9. Die Kupplung 12 kann zumindest abschnittsweise außerhalb des Gehäuses 4 angeordnet sein. Die Kupplung 12 ist insbesondere vakuumisoliert. Eine männliche Kupplung 14 führt von dem Hauptventil 9 weg. Von einer Kupplung 15 führt eine Leitung 16 zu dem Entlüftungsventil 10. Eine weitere Leitung 17 führt von dem Entlüftungsventil 10 weg und mündet in die Kupplung 14 ein.

Das erste Volumen 7 ist über eine Leitung 18 zugänglich. Über die Leitung 18 kann das erste Volumen 7 beispielsweise entlastet oder evakuiert werden. Der Kupplungsvorrichtung 2 kann hierzu eine Vakuumpumpe 19 zugeordnet sein. Ferner kann der Kupplungsvorrichtung 2 auch ein Start-Stop-Taster 20 zugeordnet sein. Mit Hilfe des Start-Stop-Tasters 20 kann ein Betankungsvorgang gestartet und gestoppt werden.

Nun zurückkehrend zu dem Empfängerstutzen 3 umfasst dieser ein Gehäuse 21, das ein drittes Volumen 22 umschließt. Es ist ferner noch ein zweites Volumen vorgesehen, auf das nachfolgend noch eingegangen wird. Dem Empfängerstutzen 3 ist eine Absperrarmatur 23 zugeordnet. Die Absperrarmaturen 8, 23 können einander gegenüberliegend angeordnet sein. Der Empfängerstutzen 3 umfasst weiterhin eine vakuumisolierte Kupplung 24 und ein Benutzerventil 25. Das Benutzerventil 25 kann von einem Benutzer geöffnet und geschlossen werden.

Der Empfängerstutzen 3 umfasst ein erstes Eingriffselement 26, das in ein erstes Gegeneingriffselement 27 der Kupplungsvorrichtung 2 formschlüssig eingreifen kann. Das heißt, die Kupplungsvorrichtung 2 kann an dem Empfängerstutzen 3 verriegelt werden. Beispielsweise kann das erste Eingriffselement 26 beweglich gelagert sein, so dass dieses in Eingriff und außer Eingriff mit dem ersten Gegeneingriffselement 27 gebracht werden kann. Das erste Eingriffselement 26 kann beispielsweise pneumatisch oder hydraulisch angesteuert werden. Sobald das erste Eingriffselement 26 und das erste Gegeneingriffselement 27 ineinandergreifen, befinden sich die Kupplungsvorrichtung 2 und der Empfängerstutzen 3 in einer ersten Position.

Die Kupplungsvorrichtung 2 umfasst ferner ein zweites Eingriffselement 28, welches geeignet ist, in ein korrespondierendes zweites Gegeneingriffselement 29 des Empfängerstutzens 3 einzugreifen. Beispielsweise kann das zweite Eingriffselement 28 beweglich gelagert sein, so dass dieses in Eingriff und außer Eingriff mit dem zweiten Gegeneingriffselement 29 gebracht werden kann. Das zweite Eingriffselement 28 kann beispielsweise pneumatisch oder hydraulisch angesteuert werden. Sobald das zweite Eingriffselement 28 und das zweite Gegeneingriffselement 29 ineinandergreifen, befinden sich die Kupplungsvorrichtung 2 und der Empfängerstutzen 3 in einer sich von der ersten Position unterscheidenden zweiten Position. In der zweiten Position ist die Kupplungsvorrichtung 2 entlang einer Längsrichtung L der Kryo-Betankungsanordnung 1 betrachtet weiter in den Empfängerstutzen 3 hineingeschoben als in der ersten Position. Der Kupplung 12 vorgeschaltet ist eine erste Temperaturmessstelle 30. Der Kupplung 24 nachgeschaltet ist eine zweite Temperaturmessstelle 31.

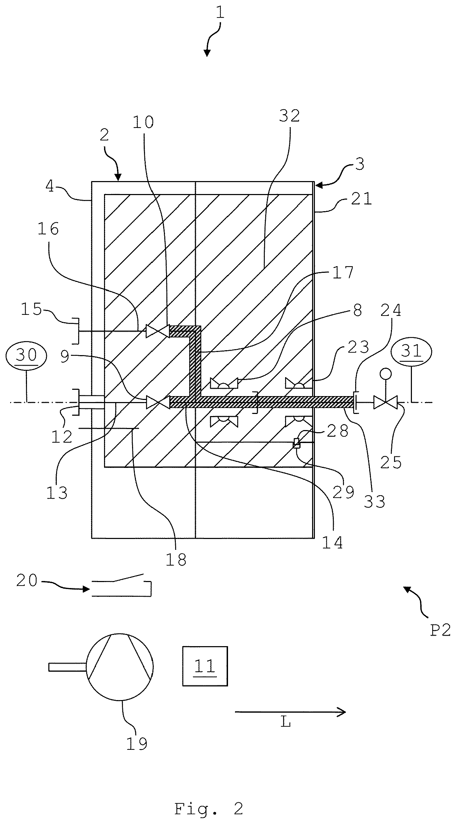

Die Funktionalität der Kryo-Betankungsanordnung 1 wird nachfolgend erläutert. Zunächst befindet sich die Kryo-Betankungsanordnung 1 in einem in der Fig. 2 gezeigten Initialzustand. In dem Initialzustand ist die Kupplungsvorrichtung 2 in einer Parkstation auf der zuvor erwähnten zweiten Position P2 verriegelt. Das heißt, das zweite Eingriffselement 28 und das zweite Gegeneingriffselement 29 greifen ineinander. Das Hauptventil 9 ist geschlossen. Das Entlüftungsventil 10 ist geöffnet. Das Benutzerventil 25 ist geschlossen. Druck und Temperatur in einem fünften Volumen 32 (schraffiert) und in einem sechsten Volumen 33 (schraffiert) sind undefiniert. Es ist ferner ein viertes Volumen vorgesehen, welches später noch erläutert wird. Das sechste Volumen 33 ist in der Kupplung 14, der Leitung 17 und in der Kupplung 24 vorgesehen.

Anschließend erfolgt ein Abkühlvorgang. Der Start des Abkühlvorgangs erfolgt automatisiert. Es erfolgt eine Druckwechselspülung des fünften Volumens 32. Danach wird das fünfte Volumen 32 über die Leitung 18 evakuiert und ein Vakuum-Haltetest durchgeführt. Sofern der Vakuum-Haltetest positiv ist, wird der Vorgang fortgeführt. Bei negativem Vakuum-Haltetest wird der Prozess gestoppt und eine Fehlerroutine durchgeführt. Das Entlüftungsventil 10 wird geöffnet. Es erfolgt eine Druckwechselspülung des sechsten Volumens 33 sowie ein Druckhaltetest. Sofern der Druckhaltetest positiv ist, wird der Vorgang fortgeführt. Bei negativem Druckhaltetest wird der Prozess gestoppt und eine Fehlerroutine durchgeführt.

Ein Start des Transfers des Kryogens kann beginnen, sobald die Temperatur an der zweiten Temperaturmessstelle 31 der Temperatur an der ersten Temperaturmessstelle 30 plus 10 K entspricht. Das Hauptventil 9 ist geöffnet. Das Entlüftungsventil 10 ist geschlossen. Das Benutzerventil 25 ist geöffnet. Das fünfte Volumen 32 ist evakuiert. Das sechste Volumen 33 ist drucklos und kalt. Die Temperatur in dem sechsten Volumen 33 entspricht der Temperatur an der zweiten Temperaturmessstelle 31. Der Abkühlvorgang ist abgeschlossen, sobald an der zweiten Temperaturmessstelle 31 die Zieltemperatur erreicht ist.

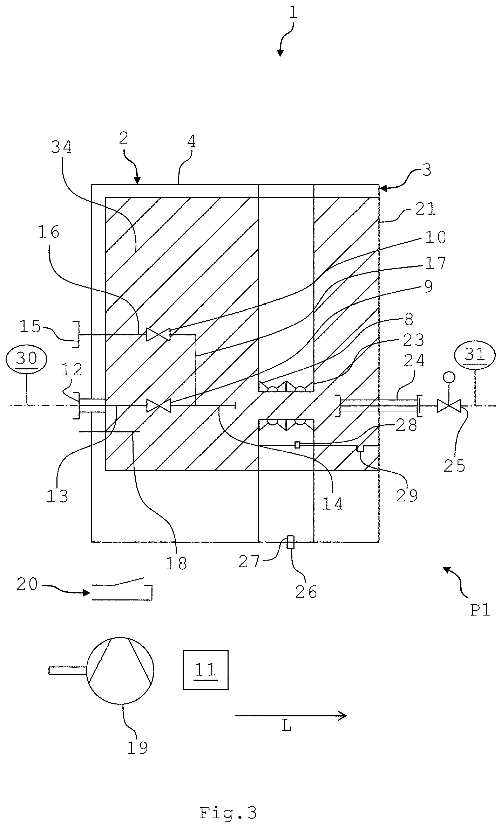

Die Fig. 3 zeigt die Kryo-Betankungsanordnung 1 nach dem Abkühlvorgang, nach dem Beenden eines Betankungsvorgangs oder nach einer Nottrennung durch den Benutzer. Zunächst wird der Transfer des Kryogens gestoppt. Es folgt ein Unterprozess zur Freigabe zum Entriegeln der Kupplungsvorrichtung 2 und des Empfängerstutzens 3. Wenn die Freigabe erfolgt, wird der Vorgang fortgesetzt. Wenn die Freigabe nicht erfolgt, wird der Vorgang gestoppt und eine Fehlerroutine durchgeführt. Über die Kupplung 15 erfolgt eine Druckwechselspülung des sechsten Volumens 33. Anschließend wird das Entlüftungsventil 10 geschlossen.

Das Vakuum in dem fünften Volumen 32 wird über die Leitung 18 entlastet. Die zweite Position P2 wird entriegelt, so dass das zweite Eingriffselement 28 außer Eingriff mit dem zweiten Gegeneingriffselement 29 ist. Das fünfte Volumen 32 wird über die Leitung 18 mit gasförmigem Kryogen bedrückt, so dass sich die Kupplungsvorrichtung 2 und der Empfängerstutzen 3 voneinander wegbewegen. Die Absperrarmaturen 8, 23 sind nach wie vor geöffnet, so dass die Volumina 7, 22 miteinander in Fluidverbindung sind und ein gemeinsames viertes Volumen 34 bilden.

Der Druck in dem vierten Volumen 34 wird langsam gesteigert, bis sich die Kupplungsvorrichtung 2 in der ersten Position P1 befindet und in dieser mit Hilfe des ersten Eingriffselements 26 und des ersten Gegeneingriffselements 27 verriegelt werden kann. Nach dem Verriegeln in der ersten Position P1 wird das vierte Volumen 34 über die Leitung 18 auf beispielsweise 1,2 bara entlastet. Das Hauptventil 9 ist geschlossen. Das Entriegeln und das pneumatische Ausdrücken ist abgeschlossen, wenn ein dem ersten Eingriffselement 26 und dem ersten Gegeneingriffselement 27 zugeordneter Schalter oder Sensor die Information ausgibt, dass das erste Eingriffselement 26 und das erste Gegeneingriffselement 27 miteinander verriegelt sind.

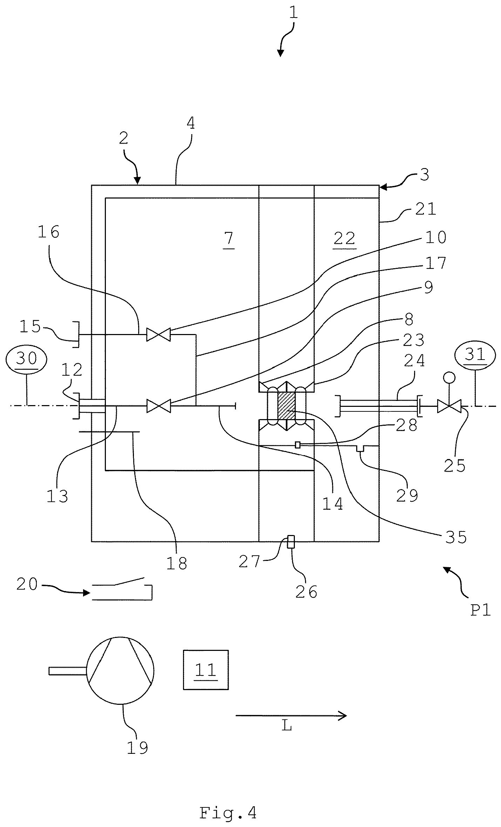

Nachfolgend werden, wie in der Fig. 4 gezeigt, die Absperrarmaturen 8, 23 geschlossen. Das Schließen kann durch eine Automatik oder den Start-Stop-Taster 20 ausgelöst werden. Zwischen den geschlossenen Absperrarmaturen 8, 23 ist ein zweites Volumen 35 vorgesehen. Die Kupplungsvorrichtung 2 und der Empfängerstutzen 3 sind nach wie vor in der ersten Position P1 verriegelt. Nach dem Entriegeln des ersten Eingriffselements 26 und des ersten Gegeneingriffselements 27 kann die Kupplungsvorrichtung 2 von dem Empfängerstutzen abgekuppelt werden.

Für das Ankuppeln der Kupplungsvorrichtung 2 an den Empfängerstutzen 3 wird der Ankuppelvorgang mit Hilfe des Start-Stop-Tasters 20 gestartet. Anschließend wird überprüft, ob die Kupplungsvorrichtung 2 derart in dem Empfängerstutzen aufgenommen ist, dass das erste Eingriffselement 26 in das erste Gegeneingriffselement 27 eingreifen kann. Ist dies der Fall, werden die Kupplungsvorrichtung 2 und der Empfängerstutzen 3 in der ersten Position P1 miteinander verriegelt. Das dritte Volumen 22 und das zweite Volumen 35 werden evakuiert. Das Vakuum in dem dritten Volumen 22 wird überprüft. Anschließend werden die Absperrarmaturen 8, 23 geöffnet.

Die erste Position P1 wird entriegelt, so dass das erste Eingriffselement 26 und das erste Gegeneingriffselement 27 nicht mehr ineinandergreifen. Das Vakuum zieht die Kupplungsvorrichtung 2 auf die zweite Position P2. Es erfolgt eine Abprüfung, ob die Kupplungsvorrichtung 2 derart relativ zu dem Empfängerstutzen 3 platziert ist, dass das zweite Eingriffselement 28 und das zweite Gegeneingriffselement 29 ineinandergreifen können. Ist dies der Fall, wird die Kupplungsvorrichtung 2 in der zweiten Position P2 verriegelt. Es erfolgt ein Druckhaltetest und eine Totraumspülung. Ein Stop beziehungsweise eine Beendigung des Ankuppelvorgangs kann über eine Anzeige oder dergleichen angezeigt werden.

Nach dem Ankuppeln kann ein Betankungsvorgang durchgeführt werden. Der Betankungsvorgang kann automatisiert oder mit Hilfe des Start-Stop-Tasters 20 ausgelöst werden. Das Auslösen kann über die zuvor erwähnte Anzeige angezeigt werden. Der Transfer des Kryogens kann nur gestartet und auch wieder gestoppt werden. Der Stop kann beispielsweise mit Hilfe der Anzeige oder dergleichen angezeigt werden.

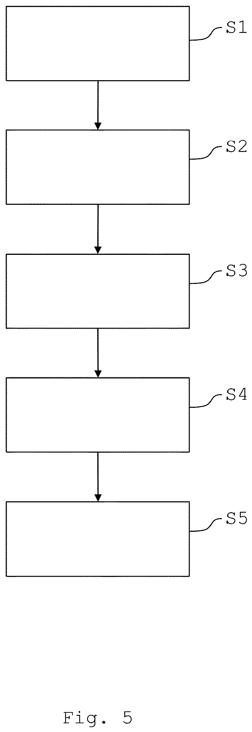

Fig. 5 zeigt ein schematisches Blockdiagramm einer Ausführungsform eines Verfahrens zum Betreiben der Kryo-Betankungsanordnung 1. Bei dem Verfahren wird in einem Schritt S1 die Kupplungsvorrichtung 2 an den Empfängerstutzen 3 derart angekuppelt, dass die Kupplungsvorrichtung 2 und der Empfängerstutzen 3 in der ersten Position P1 miteinander verriegelt werden. In einem Schritt S2 werden die Kupplungsvorrichtung 2 und/oder der Empfängerstutzen 3 mit einem Unterdruck beaufsch lagt.

Anschließed werden in einem Schritt S3 die Kupplungsvorrichtung 2 und der Empfängerstutzen 3 entriegelt, so dass die Kupplungsvorrichtung 2 bedingt durch den Unterdruck aus der ersten Position P1 in die sich von der ersten Position P1 unterscheidende zweite Position P2 in Richtung auf den Empfängerstutzen 3 zu verlagert wird. In einem Schritt S4 werden die Kupplungsvorrichtung 2 und der Empfängerstutzen 3 in der zweiten Position P2 verriegelt. Anschließend kann in einem Schritt S5 der Betankungsvorgang gestartet werden.

Obwohl die vorliegende Erfindung anhand von Ausführungsbeispielen beschrieben wurde, ist sie vielfältig modifizierbar.

### Verwendete Bezugszeichen

- 1: Kryo-Betankungsanordnung
- 2: Kupplungsvorrichtung
- 3: Empfängerstutzen
- 4: Gehäuse
- 5: Wandung
- 6: Wandung
- 7: Volumen
- 8: Absperrarmatur
- 9: Hauptventil
- 10: Entlüftungsventil
- 11: Steuereinrichtung
- 12: Kupplung
- 13: Leitung
- 14: Kupplung
- 15: Kupplung
- 16: Leitung
- 17: Leitung
- 18: Leitung
- 19: Vakuumpumpe
- 20: Start-Stop-Taster
- 21: Gehäuse
- 22: Volumen
- 23: Absperrarmatur
- 24: Kupplung
- 25: Benutzerventil
- 26: Eingriffselement
- 27: Gegeneingriffselement
- 28: Eingriffselement
- 29: Gegeneingriffselement
- 30: Temperaturmessstelle
- 31: Temperaturmessstelle
- 32: Volumen
- 33: Volumen
- 34: Volumen
- 35: Volumen

- L: Längsrichtung
- P1: Position
- P2: Position
- S1: Schritt
- S2: Schritt
- S3: Schritt
- S4: Schritt
- S5: Schritt

## Patentansprüche

1. Verfahren zum Betreiben einer Kryo-Betankungsanordnung (1) umfassend eine Kupplungsvorrichtung (2) und einen Empfängerstutzen (3), wobei das Verfahren folgenden Schritt aufweist:
a) Ankuppeln (S1) der Kupplungsvorrichtung (2) an den Empfängerstutzen (3) derart, dass die Kupplungsvorrichtung (2) und der Empfängerstutzen (3) in einer ersten Position (P1) miteinander verriegelt werden,
**dadurch gekennzeichnet, dass** das Verfahren folgende Schritte aufweist:
b) Beaufschlagen (S2) der Kupplungsvorrichtung (2) und/oder des Empfängerstutzens (3) mit einem Unterdruck,
c) Entriegeln (S3) der Kupplungsvorrichtung (2) und des Empfängerstutzens (3), so dass die Kupplungsvorrichtung (2) bedingt durch den Unterdruck aus der ersten Position (P1) in eine sich von der ersten Position (P1) unterscheidende zweite Position (P2) in Richtung auf den Empfängerstutzen (3) zu verlagert wird,
d) Verriegeln (S4) der Kupplungsvorrichtung (2) und des Empfängerstutzens (3) in der zweiten Position (P2), und
e) Starten (S5) eines Betankungsvorgangs.

2. Verfahren nach Anspruch 1, wobei vor dem Schritt e) ein Druckhaltetest durchgeführt wird.

3. Verfahren nach Anspruch 1 oder 2, wobei während des Schritts b) ein zwischen einer Absperrarmatur (8) der Kupplungsvorrichtung (2) und einer Absperrarmatur (23) des Empfängerstutzens (3) vorgesehenes Volumen (35) mit dem Unterdruck beaufschlagt wird.

4. Verfahren nach Anspruch 3, wobei vor dem Schritt c) die Absperrarmaturen (8, 23) geöffnet werden.

5. Verfahren nach einem der Ansprüche 1 - 4, wobei während des Schritts b) ein von einem Gehäuse (21) des Empfängerstutzens (3) umschlossenes Volumen (22) mit dem Unterdruck beaufschlagt wird.

6. Verfahren nach einem der Ansprüche 1 - 5, wobei die Schritte a) bis e) mit Hilfe einer Steuereinrichtung (11) der Kryo-Betankungsanordnung (1) automatisiert durchgeführt werden.

7. Verfahren nach einem der Ansprüche 1 - 6, wobei vor oder bei dem Schritt e) ein Hauptventil (9) der Kupplungsvorrichtung (2) und ein Benutzerventil (25) des Empfängerstutzens (3) geöffnet werden.

8. Verfahren nach einem der Ansprüche 1 - 7, wobei während des Schritts c) eine Kupplung (14) der Kupplungsvorrichtung (2) an eine Kupplung (24) des Empfängerstutzens (3) angekuppelt wird.

9. Verfahren nach Anspruch 8, wobei nach dem Schritt e) ein Entlüftungsventil (10) der Kupplungsvorrichtung (2) geöffnet wird, um eine Druckwechselspülung der Kupplungen (14, 24) durchzuführen.

10. Verfahren nach Anspruch 9, wobei die Kupplungsvorrichtung (2) und/oder der Empfängerstutzen (3) nach der Druckwechselspülung von dem Unterdruck entlastet werden.

11. Verfahren nach Anspruch 10, wobei die Kupplungsvorrichtung (2) und der Empfängerstutzen (3) nach dem Entlasten von dem Unterdruck in der zweiten Position (P2) entriegelt werden.

12. Verfahren nach Anspruch 11, wobei die Kupplungsvorrichtung (2) und/oder der Empfängerstutzen (3) nach dem Entriegeln mit einem Überdruck beaufschlagt werden, so dass die Kupplungsvorrichtung (2) bedingt durch den Überdruck aus der zweiten Position (P2) in Richtung von dem Empfängerstutzen (3) weg in die erste Position (P1) verlagert wird.

13. Verfahren nach Anspruch 12, wobei die Kupplungsvorrichtung (2) und der Empfängerstutzen (3) in der ersten Position (P1) verriegelt werden.

14. Verfahren nach Anspruch 13, wobei eine Absperrarmatur (8) der Kupplungsvorrichtung (2) und eine Absperrarmatur (23) des Empfängerstutzens (3) verschlossen werden.

15. Verfahren nach einem der Ansprüche 1 - 14, wobei vor dem Schritt e) ein Abkühlvorgang durchgeführt wird.

## Claims

1. Method for operating a cryogenic refueling arrangement (1) comprising a coupling device (2) and a receiver socket (3), wherein the method comprises the following step:
a) coupling (S1) the coupling device (2) to the receiver socket (3) such that the coupling device (2) and the receiver socket (3) are locked to one another in a first position (P1),
**characterized in that** the method comprises the following steps:
b) applying (S2) a negative pressure to the coupling device (2) and/or the receiver socket (3),
c) unlocking (S3) the coupling device (2) and the receiver socket (3) so that the negative pressure causes the coupling device (2) to move, in a direction toward the receiver socket (3), from the first position (P1) into a second position (P2), which is different from the first position (P1),
d) locking (S4) the coupling device (2) and the receiver socket (3) in the second position (P2), and
e) starting (S5) a refueling process.

2. Method according to claim 1, wherein a pressure-hold test is carried out prior to step e).

3. Method according to either claim 1 or claim 2, wherein, during step b), the negative pressure is applied to a volume (35) provided between a shut-off valve (8) of the coupling device (2) and a shut-off valve (23) of the receiver socket (3).

4. Method according to claim 3, wherein, prior to step c), the shut-off valves (8, 23) are opened.

5. Method according to any of claims 1-4, wherein, during step b), the negative pressure is applied to a volume (22) enclosed by a housing (21) of the receiver socket (3).

6. Method according to any of claims 1-5, wherein steps a) to e) are carried out in an automated manner by means of a control device (11) of the cryogenic refueling arrangement (1).

7. Method according to any of claims 1-6, wherein, prior to or in step e), a main valve (9) of the coupling device (2) and a user valve (25) of the receiver socket (3) are opened.

8. Method according to any of claims 1-7, wherein, during step c), a coupling (14) of the coupling device (2) is coupled to a coupling (24) of the receiver socket (3).

9. Method according to claim 8, wherein, after step e), an air relief valve (10) of the coupling device (2) is opened in order to carry out alternating pressure flushing of the couplings (14, 24).

10. Method according to claim 9, wherein the negative pressure is reduced in the coupling device (2) and/or the receiver socket (3) after the alternating pressure flushing.

11. Method according to claim 10, wherein the coupling device (2) and the receiver socket (3) are unlocked in the second position (P2) after the negative pressure is reduced.

12. Method according to claim 11, wherein an overpressure is applied to the coupling device (2) and/or the receiver socket (3) after the unlocking, so that the overpressure causes the coupling device (2) to move, in a direction away from the receiver socket (3), from the second position (P2) into the first position (P1).

13. Method according to claim 12, wherein the coupling device (2) and the receiver socket (3) are locked in the first position (P1).

14. Method according to claim 13, wherein a shut-off valve (8) of the coupling device (2) and a shut-off valve (23) of the receiver socket (3) are closed.

15. Method according to any of claims 1-14, wherein a cooling process is carried out prior to step e).

## Revendications

1. Procédé permettant de faire fonctionner un système de ravitaillement cryogénique (1) comprenant un dispositif de raccordement (2) et une tubulure de réception (3), dans lequel le procédé présente l'étape suivante :
a) raccordement (S1) du dispositif de raccordement (2) à la tubulure de réception (3) de telle sorte que le dispositif de raccordement (2) et la tubulure de réception (3) sont verrouillés l'un à l'autre dans une première position (P1),
**caractérisé en ce que** le procédé présente les étapes suivantes :
b) sollicitation (S2) du dispositif de raccordement (2) et/ou de la tubulure de réception (3) par une dépression,
c) déverrouillage (S3) du dispositif de raccordement (2) et de la tubulure de réception (3), de sorte que le dispositif de raccordement (2) est déplacé, en raison de la dépression, de la première position (P1) vers une seconde position (P2) différente de la première position (P1), en direction de la tubulure de réception (3),
d) verrouillage (S4) du dispositif de raccordement (2) et de la tubulure de réception (3) dans la seconde position (P2), et
e) démarrage (S5) d'un processus de ravitaillement.

2. Procédé selon la revendication 1, dans lequel un test de maintien de pression est effectué avant l'étape e).

3. Procédé selon la revendication 1 ou 2, dans lequel, pendant l'étape b), un volume (35) prévu entre un robinet d'arrêt (8) du dispositif de raccordement (2) et un robinet d'arrêt (23) de la tubulure de réception (3) est sollicité par la dépression.

4. Procédé selon la revendication 3, dans lequel, avant l'étape c), les robinets d'arrêt (8, 23) sont ouverts.

5. Procédé selon l'une des revendications 1 à 4, dans lequel, pendant l'étape b), un volume (22) entouré par un boîtier (21) de la tubulure de réception (3) est sollicité par la dépression.

6. Procédé selon l'une des revendications 1 à 5, dans lequel les étapes a) à e) sont effectuées de manière automatisée à l'aide d'un appareil de commande (11) du système de ravitaillement cryogénique (1).

7. Procédé selon l'une des revendications 1 à 6, dans lequel, avant ou lors de l'étape e), une vanne principale (9) du dispositif de raccordement (2) et une vanne utilisateur (25) de la tubulure de réception (3) sont ouvertes.

8. Procédé selon l'une des revendications 1 à 7, dans lequel, pendant l'étape c), un raccord (14) du dispositif de raccordement (2) est raccordé à un raccord (24) de la tubulure de réception (3).

9. Procédé selon la revendication 8, dans lequel, après l'étape e), une vanne de purge (10) du dispositif de raccordement (2) est ouverte pour effectuer un rinçage à pression alternée des raccords (14, 24).

10. Procédé selon la revendication 9, dans lequel le dispositif de raccordement (2) et/ou la tubulure de réception (3) sont déchargés de la dépression après le rinçage à pression alternée.

11. Procédé selon la revendication 10, dans lequel le dispositif de raccordement (2) et la tubulure de réception (3) sont déverrouillés après avoir été déchargés de la dépression dans la seconde position (P2).

12. Procédé selon la revendication 11, dans lequel le dispositif de raccordement (2) et/ou la tubulure de réception (3) sont sollicités par une surpression après le déverrouillage, de sorte que le dispositif de raccordement (2) est déplacé, en raison de la surpression, de la seconde position (P2) vers la première position (P1), dans la direction opposée à la tubulure de réception (3).

13. Procédé selon la revendication 12, dans lequel le dispositif de raccordement (2) et la tubulure de réception (3) sont verrouillés dans la première position (P1).

14. Procédé selon la revendication 13, dans lequel un robinet d'arrêt (8) du dispositif de raccordement (2) et un robinet d'arrêt (23) de la tubulure de réception (3) sont fermés.

15. Procédé selon l'une des revendications 1 à 14, dans lequel un processus de refroidissement est effectué avant l'étape e).
